# EUROPEAN PATENT APPLICATION

(11) **EP 1 134 600 A1**
(43) Date of publication of application: **19.09.2001**
(21) Application number: 00302030.2
(22) Date of filing: 14.03.2000
(51) Int. Cl.: G02B 6/38, G02B 6/36, H04B 10/22, G02B 6/40

(54) **Multiple path rotary optical connector**

(71) Applicant: Morgan-Rekofa GmbH & Co. KG, 53474 Bad Neuenahr-Ahrweiler (DE)
(72) Inventor: Loon, Karel Henrik van, Morgan-Rekofa GmbH & Co.KG, 53474 Bad Neuenahr-Ahrweiler (DE); Woick, Lothar, Morgan-Rekofa GmbH & Co.KG, 53474 Bad Neuenahr-Ahrweiler (DE)
(74) Representative: Boff, James Charles

(57) **Abstract**

A multiple pathway optical connector comprises:-
a) an inner light conductor (6)
b) at least one outer annular light conductor (7) comprising a plurality of fibres
the inner and outer light conductors terminating at a connection face of the optical connector (5), such that a pair of such connectors mounted with connection faces opposed and separated by a gap (3) provide an inner optical pathway and at least one outer optical pathway for data transmission across the gap. To improve transmission the outer light conductor:-
a) comprises at least two annular rings of fibres,
b) comprises fibres of non-circular cross section so that the area encompassed by the fibres is greater than the area that would be covered if the fibres were cylindrical
c) or both

## Description

This invention relates to multiple path rotary optical connectors. So-called rotary transfer units are used by customers in assembly robots, cranes, elevators, rotary tables and machines for special applications. Such rotary transfer units are used to transfer power, data, and fluids between relatively rotating parts.

Optical data transmission is becoming a more important feature in all types of machinery and vehicles. Frequently there is a need to transfer data between relatively rotating parts of machinery. Examples of previous approaches to solving this problem include the following patent specifications.

U.S. 4278323 discloses an "optical slip ring". This comprises a drum housed in a mounting. About the edge of the drum and the inside of the housing there are a plurality of optical sensors and light emitting diodes arranged to transmit optical signals across the gap between drum and housing. This arrangement is two-way but clumsy.

U.S. 5392370 discloses a "multi-channel fibre optic rotatable interconnection" which uses step-index multi-mode optical fibres to transmit a combined signal across a gap, the signal being resolved on receipt. This system incurs the risk of cross-talk between the different modes of the fibre.

U.S. 5553176 discloses a "single in-line fibre optic rotary joint" comprising inner and outer concentric body portions, one body portion housing an optical to electrical converter and light source, the other housing an electrical to optical converter and a light sensor. An optical signal entering the coupling is converted into an electrical signal which drives the light source. Light from the light source is detected at the light sensor and converted from an electrical signal into an optical signal. This coupling has only one pathway and is clumsy.

WO99/18463 discloses a complex system in which signals are transmitted tangentially in the space between relatively rotating inner and outer bodies. The arrangement, although capable of two-way transmission of data, is complex and bulky.

DE4344057 discloses a rotary connector in which two opposing light conductor ends are supported at a fixed distance from one another of less than 1 mm to allow their relative rotation, the light pulses being transmitted from the stationary light conductor end to the rotating light conductor end. Such connectors can have a central light conductor and an outer annular light conductor. A problem with such connectors is that the arrangement of fibres in the outer light conductor is critical, at certain angles of rotation the light transmitted can be severely attenuated; and even extinguished.

These documents, for reasons set out above, do not provide a practical approach to low attenuation transmission of optical data between relatively rotating bodies at all relative angles between the bodies.

Two optical data pathways can be built using Wavelength Division Multiplexing (WDM), Time Division Multiplexing (TDM) or Space Division Multiplexing (SDM). A WDM-solution is passive and needs two wavelength-selective filters, two light splitters and two light sources with different wavelengths. A TDM-solution is not passive and needs a high-speed electronic time control system. A SDM-solution is passive and needs two separated optical pathways. Considering the optical power budget from a light source to a receiver, a disadvantage of the WDM-solution is that wavelength selective filters and light splitters have a high attenuation. Considering the system flexibility, a TDM-solution has to be adapted to the different data transmission speeds. Known contact-free connectors with two or more pathways include those listed below.

| **Producer** | **Description** |
|---|---|
| Hüttenhölscher Maschinenbau GmbH Grasweg 47; 33415 Verl; Germany | SDM with 2 coaxial optical pathways based on polymer optical fibres (1 mm centre fibre and ring with 16 x 0,25 mm fibres). |
| Litton Precision Products | 2 to 12 optical pathways based on 50 or 125 µm fibres. |
| www.focaltech.ns.ca | 1 to 12 optical pathways for submarine applications. Single mode and multi-mode solutions with WDM and SDM. |
| Nova Scotia Slip Rings Focal Technologies Inc; 40 Thornhill Drive, Unit 7; Dartmouth; Nova Scotia; Canada | |
| Gauss Dr. Schwan GmbH & Co. KG | 2 or more optical pathways limited to 10 Mbit/s |
| Gelco Profil S.R.L. Via dell'Artigianato, 4; 30030 Vigonovo (VE); Italy | 2 optical pathways |
| Schleifring und Apparatebau GmbH Am Hardtanger 10; 82256 Fürstenfeldbruck | Different solutions for 1 to 4 optical pathways. |

The applicants have realised that a low attenuation practical arrangement for a multiple pathway space division multiplexing optical connector can be obtained by providing a connector comprising:-
a) an inner light conductor
b) at least one outer annular light conductor comprising a plurality of fibres the inner and outer light conductors terminating at a connection face of the optical connector, such that a pair of such connectors mounted with connection faces opposed and separated by a gap provide an inner optical pathway and at least one outer optical pathway for data transmission across the gap, characterised in that the outer light conductor comprises at least two annular rings of fibres.

The applicants have further realised that a low attenuation practical arrangement for a multiple pathway space division multiplexing optical connector can be obtained by providing a connector comprising:-
a) an inner light conductor
b) at least one outer annular light conductor comprising a plurality of fibres the inner and outer light conductors terminating at a connection face of the optical connector, such that a pair of such connectors mounted with connection faces opposed and separated by a gap provide an inner optical pathway and at least one outer optical pathway for data transmission across the gap, characterised in that the outer light conductor fibres are of non-circular cross section so that the area encompassed by the fibres is greater than the area that would be covered if the fibres were cylindrical.

Both of these approaches to improving low attenuation transmission of optical data between relatively rotating bodies can be combined.

To improve optical separation of the inner and outer optical pathways the inner light conductor and the outer light conductor may be physically separated at the connection face by a tube.

To improve optical separation of the inner and outer optical pathways the connection face of one of the pair of connectors may have a protrusion matching a recess in the connection face of the other of the pair of connectors, the protrusion being formed by the inner light conductor.

Further features of the invention are made apparent in the claims and the following description with reference to the drawings in which:-
Fig. 1 is a schematic drawing of a connector according to the invention, shown in both side and end view;
Fig. 2 is a schematic side view of a pair of the connectors of Fig. 1 showing their disposition in use;
Fig. 3 is a schematic side view of the pair of connectors of Fig. 2 mounted in a housing for use;
Fig. 4 shows schematically light transmission between the pair of connectors of Fig. 2;
Fig. 5 shows schematically further details of a connector in accordance with the invention;
Fig. 6 shows schematically further details of a connector in accordance with the invention;
Fig. 7 shows schematically and photographically arrangements of optical fibres in accordance with the prior art and in accordance with the present invention;
Fig. 8 shows schematically and photographically arrangements of optical fibres in accordance with the present invention;
Fig. 9 shows a cable winding apparatus using a connector in accordance with the present invention;
Fig. 10 shows a rotary transfer unit comprising a connector in accordance with the present invention;
Fig. 11 shows schematically different methods of reducing cross-talk in connectors in accordance with the present invention; and
Fig. 12 shows schematically different fibre arrangements for connectors in accordance with the present invention.

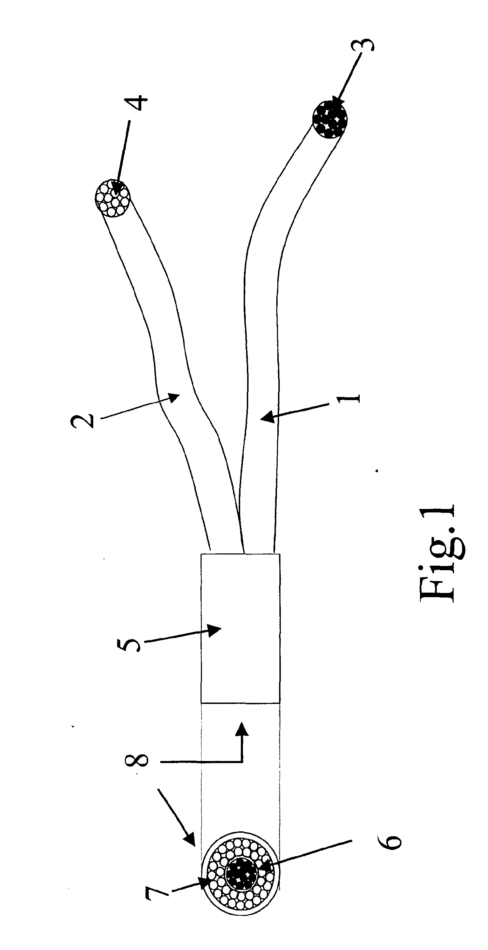

In Fig. 1 a pair of optical fibre cables 1,2 have separate optical connectors (not shown) at one end 3,4 respectively. The other ends of the optical fibre cables are brought together in a connector body 5.

In connector body 5 the separate fibres of cable 1 are brought together to form an inner light conductor 6, and the separate fibres of cable 2 are brought together to form an outer annular light conductor 7. The inner light conductor 6 and outer light conductor 7 terminate at a connector face 8. The outer annular light conductor 7 comprises two rows of fibres for reasons that will be explained more fully below.

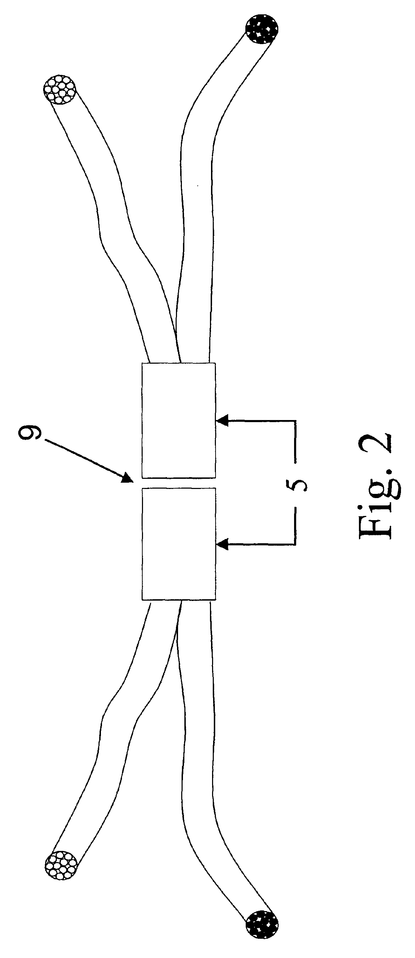

As shown in Fig. 2, two connector bodies 5 may be brought together so that connector faces 8 are separated by an air gap 9. This gap should preferably be maintained in the range 0.02mm to 0.3mm. If the gap is less than 0.05mm mechanical movement of the connectors can damage inner light conductor 6 and outer light conductor 7, or prevent rotation. If the gap is greater than 0.2mm losses in transmission may be too great.

To maintain the gap 9 between the connector faces 8 the connector bodies 5 are mounted in a housing 10. Housing 10 comprises an outer shell 11 and an inner shell 12 in each of which the connector bodies 5 can be mounted. A ball race or other rotational fixing 13 is provided to allow free rotation of the shells 11 and 12 with their mounted connector bodies 5. Flange 14 helps to keep dust out of the rotational fixing 13 and out of air gap 9.

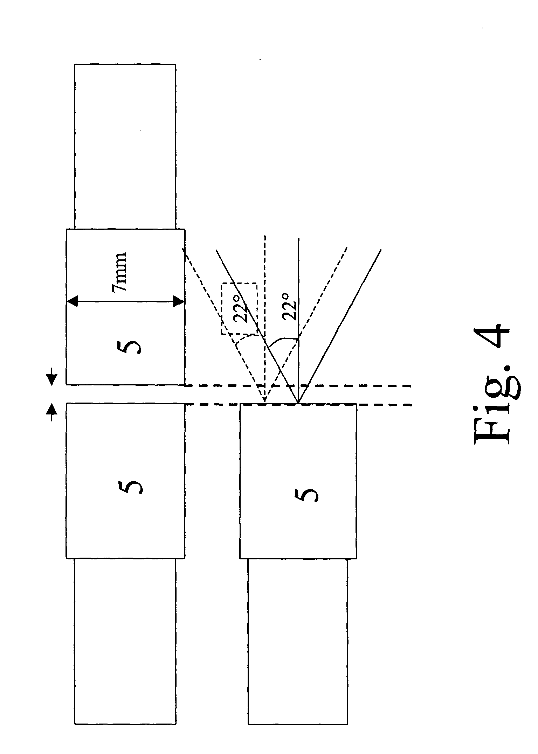

Fig. 4 shows the manner in which light leaves the inner light conductor 6 (shown as solid lines) and the outer light conductor 7 (shown as dotted lines). Light will leave a fibre as a cone, typical angle 22°. Provided the air gap 9 between two connectors 5 is small enough, light leaving one connector will not have spread far by the time it reaches the other connector. This will lead to little cross-talk between the inner light conductor 6 and outer light conductor 7 (see separation between the solid and dotted cones shown in Fig. 4). Where light transmission is in opposed directions for the inner and outer light conductors cross talk will be even smaller or negligible.

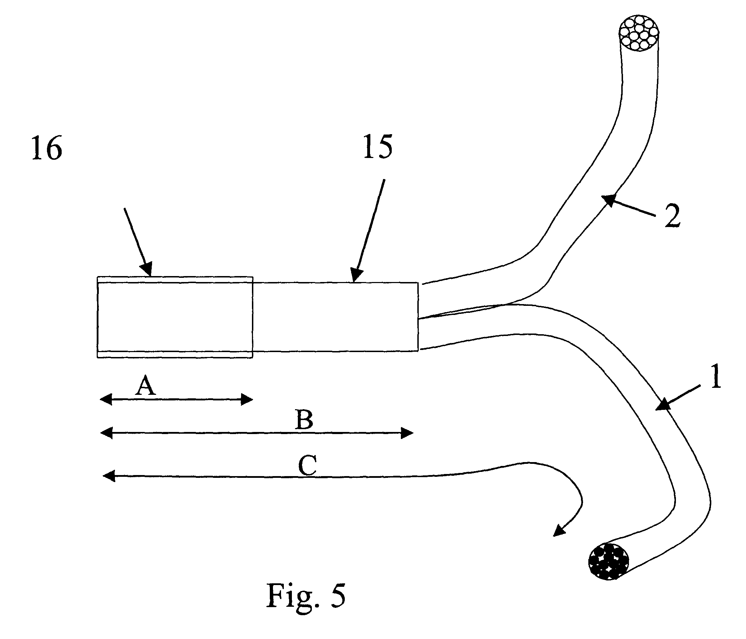

Fig. 5 shows a typical connector in accordance with this invention in closer detail. Optical fibre cables 1,2 are of a type having suitable protective sheathing for the bending radii to be encountered in use. The cables pass into a flexible sheath 15 that permits some bending of the optical fibre cable and then into a metal fixing tube 16 that forms the body 5 of a connector according to the invention. This arrangement prevents excessive bending where the flexible optical cables 1,2 pass into the body 5 and so cushions the optical fibres against damage.

The length A of the metal fixing tube 16 may be for example 15-25mm. The length B from the cable end of the flexible sheath 16 to the tip of the connector may typically be 120mm. The length C from the end of the optical fibre cable to the tip of the connector may typically be 150mm to 10m.

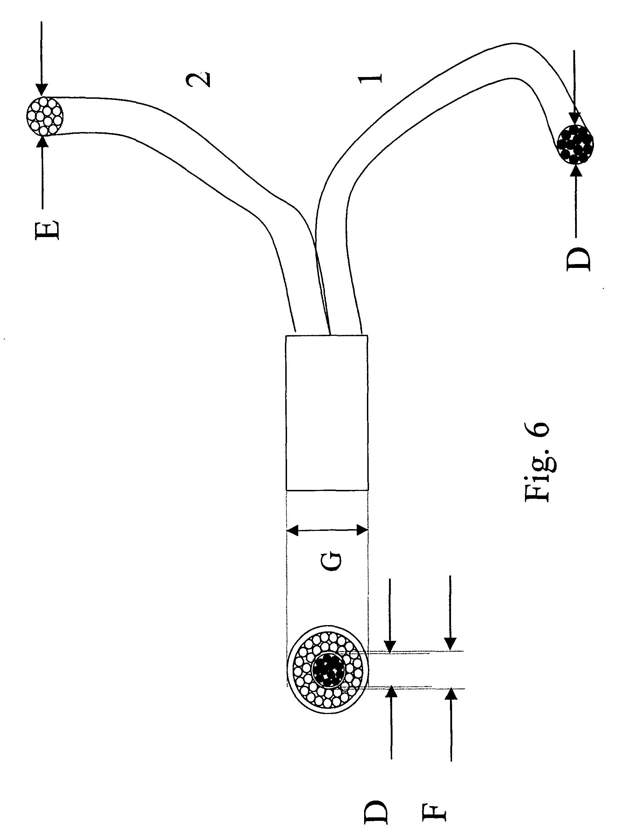

As an example, referring to Fig. 6, optical fibre cable 1 may have a fibre bundle of 1.6mm cross section (D) and this will be carried through the connector to connector face 8 where it will have the same cross-section. In contrast optical fibre cable 2 may have a fibre bundle cross-section (E) of, say, 2.2mm. If a 0. lmm gap is left between inner light conductor 6 and outer light conductor 7 so that, for example, dimension (F) is about 1.8mm, then the overall diameter (G) of the connector body can easily be about 8mm or less.

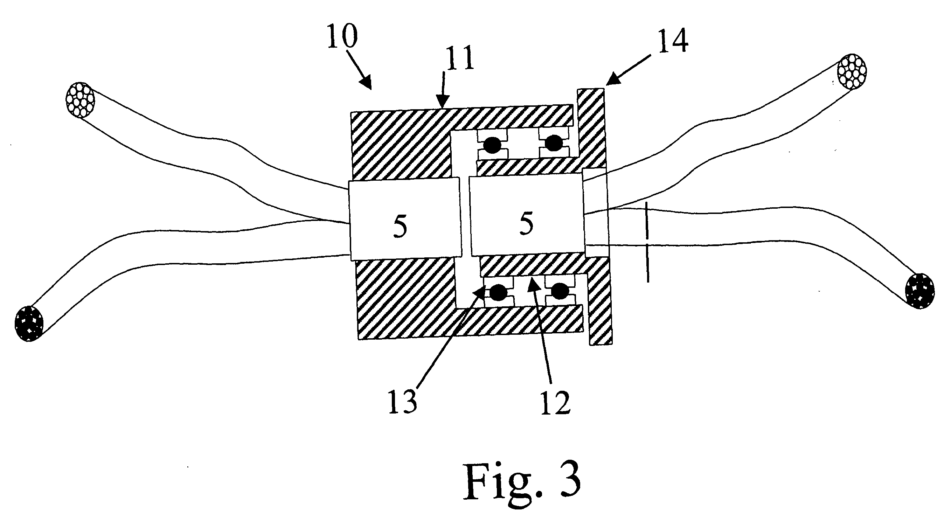

Figs. 1 to 6 show the inner light conductor 6 as being made from a bundle of fibres. For a more compact connector a single polymer optical fibre with 1 mm in diameter (this is a very cheap standard size) may be used as the inner light conductor 6.

If the outer light conductor 7 is built with a single row of 16 fibres of 0.25 mm diameter the total circumference of these 16 fibres is 16 x 0.25 mm = 4 mm. The central diameter of this ring is 4 mm / 3.14 = 1.27 mm. Such a standard bundle of 16 polymer optical fibres fits almost exactly around the central fibre (1 mm + 2 x (0.25 mm /2) = 1.25). But this is not good enough because of consequent big variations in attenuation.

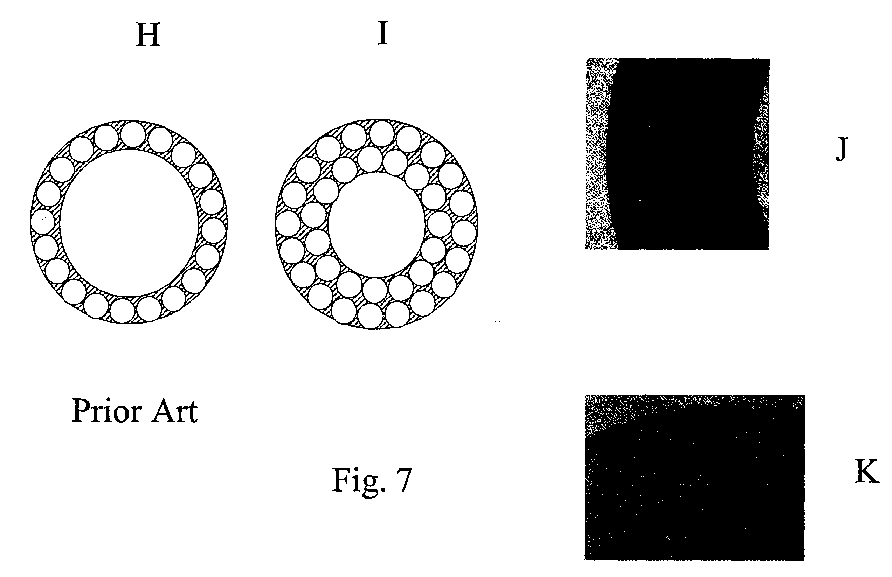

As indicated in Fig. 7 at H, for prior art connectors where the fibres are circular in cross section and a single row of fibres forms the outer light conductor 7, a relatively large proportion of the annular outer light conductor 7 is occupied by non-light-guiding-material in the ring (shaded parts). Except at angular positions where the fibres are exactly aligned, the fibres from one connector will be sending light partially into the fibres of the other connector and partially into this non-light-guiding part. Since it is difficult to ensure a uniform disposition of the fibres this means that for some angular positions, for poorly arranged fibres, light transmission can drop almost to zero. This is particularly a problem where rotation is slow and/or where transmission is required at all relative angles between the bodies. The present invention proposes two ways of overcoming this problem, which may be used separately or in combination.

As shown in Fig 7 at I, the relative area of the non-light-guiding material gets smaller with a two ring annulus compared with the one ring annulus. If the rings have the same number of fibres but are not exactly aligned cross talk between the fibres of the inner ring and the outer ring will reduce the variation in transmission to some extent. Preferably however the two rings have different numbers of fibres. The angle when the maximum of light is led into the non-light-guiding material will be different for two rings if these have different numbers of fibres. Yet more preferably the number of fibres in one ring is not an exact multiple of the number of fibres in the other ring. All of these factors lead in practice to the variation of attenuation in a double ring being much smaller than for a single ring (typically 15 % for a double ring compared with 60 % for a single ring).

As an example, the thickness of this double ring may be between 0.4 and 0.5 mm if the fibres have a diameter equal to 0.25 mm. This ring thickness is also easier to handle according to mechanical manufacturing of the holding parts.

By using a standard bundle of 48 fibres with a diameter of 0,25 mm two rings with 26 and 22 fibres can be built. The central diameter of the outer ring would nominally be 26 x 0.25 mm/pi = 2.07 mm; and of the inner ring 22 x 0.25 mm/pi = 1.75 mm. These two rings fit together closely. For the inner ring with 22 fibres the fibres of an opposed connector will completely out of alignment (i.e. with the centre of one fibre directed at the junction between two adjacent fibres of the opposed connector) every 360°/22 ≈ 16.36°. For the outer ring the fibres will be out of alignment every 360°/26 ≈ 13.85°. For both sets of fibres to be completely out of alignment would require a carefully matched pair of connectors with precise angular displacements between inner and outer ring. In practice this is extremely unlikely to arise and in any event the cross talk between inner and outer rings will reduce the drop in transmission.

By then providing a non-light conducting separation tube with an inner diameter of 1 mm and an outside diameter = 1,5 mm within the inner ring a lmm optical fibre can be inserted to form the inner light conductor 6. The tube reduces the risk of cross-talk between the inner light conductor 6 and the outer light conductor 7.

Manufacture of the connectors is assisted by provision of the tube. In essence, a bundle of fibres are inserted into the connector body 5, a mandrel is inserted and moved until a close fit is obtained. The fibres are then glued into place (or melted - see below), the mandrel removed and the inner light conductor 6 inserted. If a tube is used it can take the place of the mandrel and not be removed.

Care must be taken in manufacture. Fig. 7 at J and K shows microscope pictures (x100) of sample connectors. In J one fibre is displaced so the outer light conductor is only one fibre thick at one place. This means that the proportion of non-light-guiding material is increased. K shows a uniformly distributed set of fibres.

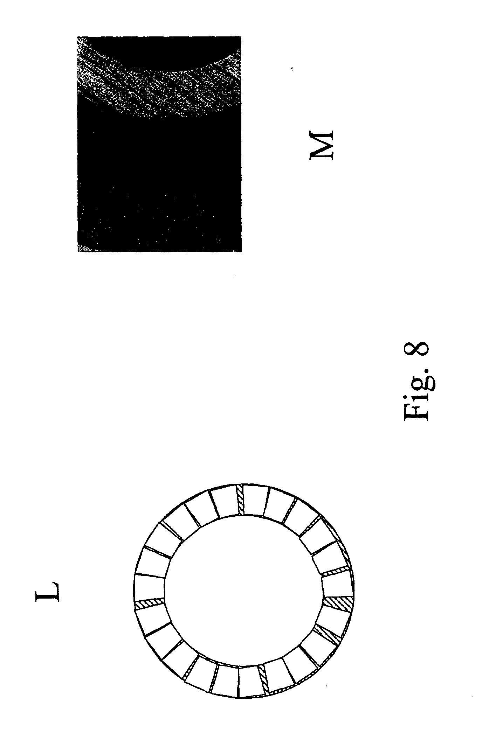

An alternative method of increasing the packing density, and so decreasing the variation in transmission, is to move to non-circular fibres. As seen in Fig. 8 at L, fibres that are non-circular in cross section can be made to occupy a greater proportion of the ring than fibres that are circular. A photograph (x100) of a connector using such fibres is shown in Fig. 8 at M.

To achieve this end the optical fibre may be partially melted. The Schott Corporation has developed a fibre-melting-method for glass bundles for high temperature applications. By melting a fibre bundle in a connector the non-light-guiding area is reduced and the attenuation is reduced by 15%. This reduction of the attenuation is very attractive even for applications at room temperature. However the process involves high temperatures to melt the glass.

Polymer optical fibres can also be melted. Heating a polymer optical fibre reduces the length and increases the thickness of the fibre. A polymer optical fibre with a diameter of 1 mm increases in diameter on heating to 1.4 mm. A polymer optical fibre with a diameter of 0.265 mm increases in diameter on heating to 0.4 mm. Typical melt temperature is between 105 and 125°C for a duration of 1 to 6 minutes. This shrinking and thickening behaviour avoids the need for complex presses and the fibres can be put in place as cylindrical fibres and then heated so that they shorten and thicken, and in thickening becoming non-cylindrical and packing the free space between the fibres. Figure 8 at M shows an outer conductor two fibres thick that has been partially melted in this way. The same principle allows the outer ring to be reduced to one ring of fibres if desired. Preferably a melted ring is used only on the receiver side of the air gap and not on the light sending side of the air gap, because the optical quality is reduced in the melted part of the fibre.

The same principles can be used when building a 3 or 4 pathway connectors. The diameter of the bundles of fibres becomes bigger. When the same fibres are used it becomes more and more difficult to insert all fibres in a standard connector.

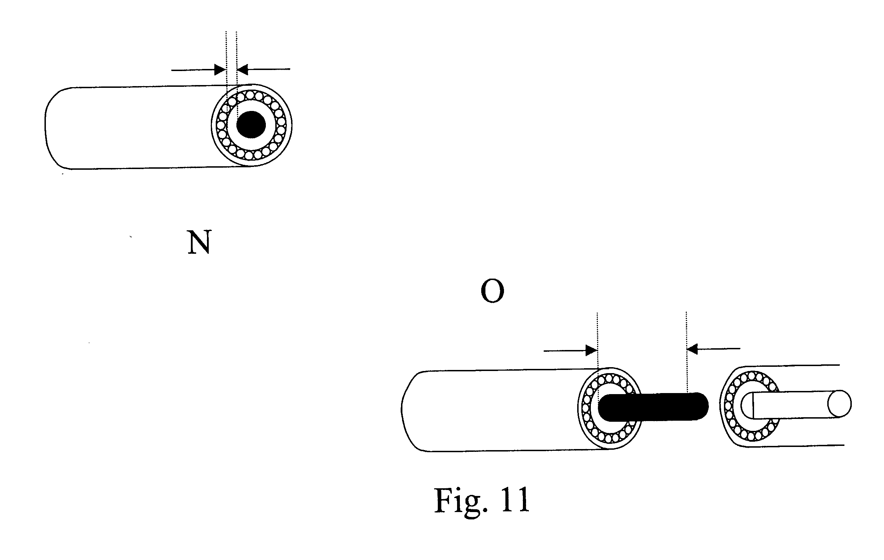

An alternative method of reducing the risk of cross talk is to have the inner light conductor 6 of one connector protrude so as to enter a corresponding recess in the other connector as shown in Fig. 11. This is more difficult to engineer than the separation tube, however the separation between the inner and outer light conductors is greater as indicated by the arrows on N (tube separation) and O (protrusion/recess separation) respectively.

When standard manufacturing tools are used to build the mechanical holders the dimensions and tolerances of the light ways should not be too small in order to be enabled to manufacture cheap components. The addition of all tolerances gives the absolute deviation. A deviation of 0.1 mm is very common. The thickness of any light guiding part should be at least 0.5 mm in order to avoid an over all attenuation of 5 dB.

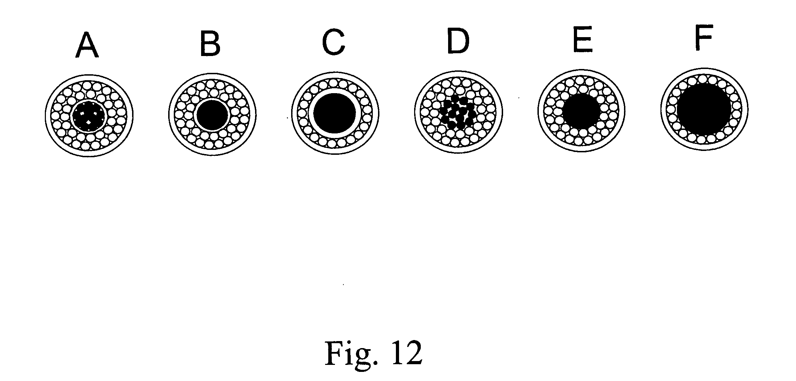

Many different fibre geometries are possible. Fig. 12 shows several ways. Versions A, B and C contain a tube between 2 light ways to reduce the cross-talk. Versions D, E and F do not have this distance between 2 light ways. In versions A and D the inner light way is built by using a fibre bundle. In the other versions the inner light way is designed by using a single fibre. Even other versions with more than hundred fibres can be designed when optical fibres with very small diameters are integrated (diameter = 30 µm to 125 µm). It is easier to bend a bundle consisting of many thin fibres than to bend a bundle of the same diameter with less fibres of a bigger diameter.

Such optical connectors can be used in any application where data is transferred across relatively rotating parts. In use the electrical power needed for an error-free optical data transmission through an optical light source and an optical slip ring may be monitored to detect degradation of an optical pathway. This degradation can have many reasons. Knowing this it can be used to provide a preventive system repair.

The optical "Interbus"-Fieldbus from Phoenix-Contact uses an amplifier (optical / electrical / optical) with a special integrated circuit. This circuit is called SUPI3OPC. Each optical path starting and ending at this circuit is observed by this optical power control. By using such a controller data transfer across a rotary transmission unit can be monitored. So far as an optical circuit is concerned, the link across the optical connector will behave no differently than a static link.

Optical data paths of this type can be used to monitor many machine variables, particularly in machinery having both optical and electrical pathways. Conventional electrical rotary connectors can have many slip rings giving many potential points of failure. The voltage that results from the continuity resistance and the transmitted current can be monitored using an analogue/digital-converter. A fault is detected when the current exceeds a limit or when the slip ring continuity resistance increases due to depositions on the slip ring or contacts. Each slip ring is controlled separately and an extra slip ring is needed for each analogue/digital-converter connection.

The temperature of the slip ring is caused by the electrical power lost in the slip ring (P=I² x R). When the temperature is monitored errors can be prevented. Because the temperature can be observed at one point no extra slip ring is needed. Every overload causing a temperature increase will be detected. Also by monitoring the ambient temperature a temperature increase due to other effects can be detected.

Electrical connectors need to be tailored to the rotational speed of the slip ring. Different materials and components need to be used for high speed or low speed slip rings. The optical connectors of the present invention can be used for low speed rotation (e.g. one or two revolutions per day) or high speed (e.g. 6000 revolutions per minute) and are particularly useful for applications where transmission needs to be effective at all angles of rotation even if the rotation is stopped at a particular angle.

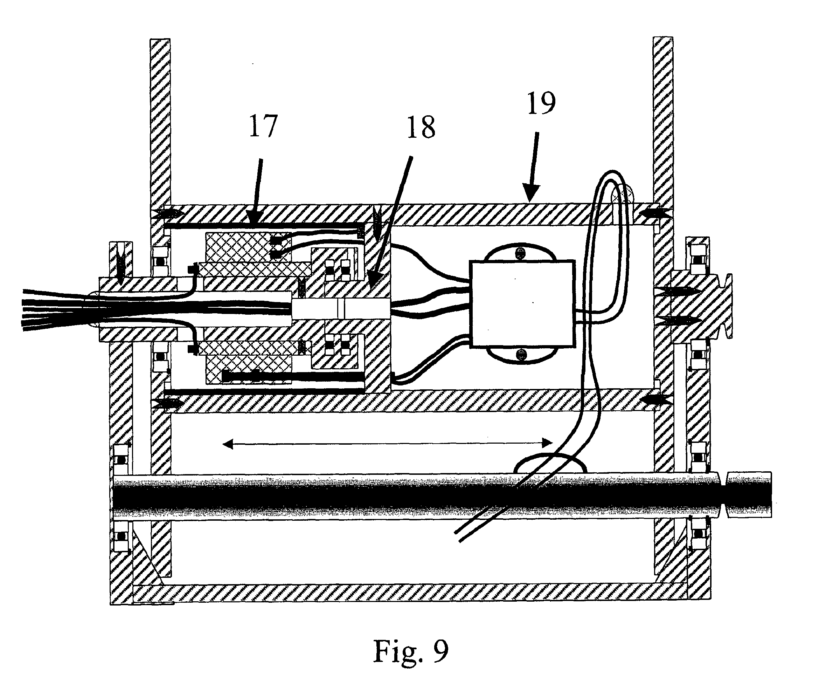

An example of the connector of the present invention in use Fig. 9 shows an optical cable winding apparatus comprising an electrical slip ring 17 and optical connector 18 in accordance with the present invention. The drum 19 is free to rotate and draw in or pay out optical cable. The position of the optical cable on the drum is controlled be rod 20 that can move laterally.

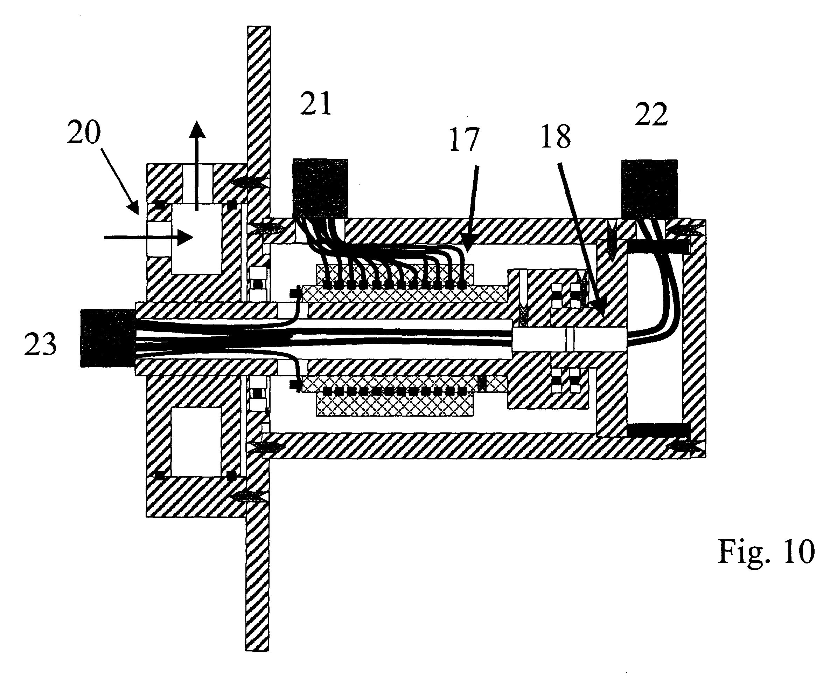

As a further example Fig. 10 shows an optical and electrical rotary transfer unit with air passage. The slip ring comprises an electrical slip ring 17 and optical connector 18 in accordance with the present invention. Rotary seal 20 permits air passage as indicated by arrows. Electrical connector 21, optical connector 22, and optical/electrical connector 23 provide connections.

It will be apparent that hydraulic and other fluid connections can be provided and that optical connectors as described will find uses in many industries.

## Claims

1. A multiple pathway optical connector comprising:-
a) an inner light conductor
b) at least one outer annular light conductor comprising a plurality of fibres the inner and outer light conductors terminating at a connection face of the optical connector, such that a pair of such connectors mounted with connection faces opposed and separated by a gap provide an inner optical pathway and at least one outer optical pathway for data transmission across the gap, **characterised in that** the outer light conductor comprises at least two annular rings of fibres.

2. A multiple pathway optical connector as claimed in claim 1, in which the number of fibres in the two annular rings are different.

3. A multiple pathway optical connector as claimed in claim 2, in which the number of fibres in one of the two annular rings is not an exact multiple of the number of fibres in the other annular ring.

4. A multiple pathway optical connector comprising:-
a) an inner light conductor
b) at least one outer annular light conductor comprising a plurality of fibres the inner and outer light conductors terminating at a connection face of the optical connector, such that a pair of such connectors mounted with connection faces opposed and separated by a gap provide an inner optical pathway and at least one outer optical pathway for data transmission across the gap, **characterised in that** the outer light conductor fibres are of non-circular cross section so that the area encompassed by the fibres is greater than the area that would be covered if the fibres were cylindrical.

5. A multiple pathway optical connector as claimed in claim 4, in which the outer light conductor comprises at least two annular rings of fibres as specified in Claims 1 to 3.

6. A multiple pathway optical connector as claimed in claim 4 or claim 5, in which the outer light conductor fibres are partially melted optical fibres.

7. A multiple pathway optical connector as claimed in any preceding claim in which the light conductor fibres are polymer optical fibres.

8. A multiple pathway optical connector as claimed in any preceding claim in which the inner light conductor and the outer light conductor are physically separated at the connection face by a tube.

9. A multiple pathway optical connector as claimed in any preceding claim in which the connection face has a protrusion formed by the inner light conductor.

10. A multiple pathway optical connector as claimed in any of claims 1 to 8, in which the connection face has a recess to receive the protrusion of a connector as claimed in claim 9.

11. A pair of connectors as claimed in any preceding claim mounted for rotation in a housing to maintain their connection faces opposed and separated by a gap to provide an inner optical pathway and at least one outer optical pathway for data transmission across the gap.

12. A pair of connectors as claimed in claim 11 in which one of the pair of connectors has a protrusion matching a recess in the connection face of the other of the pair of connectors, the protrusion being formed by the inner light conductor.

13. A pair of connectors as claimed in claim 11 or claim 12 in which one connector has outer light conductor fibres of non-circular cross section and the other connector has outer light conductor fibres of circular cross section.

14. A method of making a connector as claimed in claim 6, in which cylindrical fibres are placed in position in a housing and then heated to partially melt the fibres.

15. Apparatus comprising a pair of connectors as claimed in any of claims 11 to 13 and further comprising control means to measure integrity of data transfer across the gap.

16. Apparatus as claimed in claim 15 in which the electrical power needed for an error-free optical data transmission through an optical light source and the pair of connectors is monitored to detect degradation of an optical pathway.

17. Apparatus comprising a pair of connectors as claimed in any of claims 11 to 13 and further comprising one or more rotary electrical connections, hydraulic connections, or other fluid connections.

18. Apparatus as claimed in Claim 17, comprising one or more electrical connections, and in which sensors are provided to sense the condition of the rotary electrical connections and data concerning the condition of the sensors is transmitted across the optical connector.

19. Apparatus as claimed in Claim 18, in which the sensor comprises a temperature sensor monitoring the condition of several rotary electrical connections.
